# EUROPEAN PATENT SPECIFICATION

(11) **EP 2 090 616 B1**
(45) Date of publication and mention of the grant of the patent: **03.10.2012**
(21) Application number: 08151512.4
(22) Date of filing: 15.02.2008
(51) Int. Cl.: C08L 23/02, C08K 5/00

(54) **Metal deactivating polymer composition**
Metalldeaktivierende Polymerzusammensetzung
Composition polymère désactivant le métal

(43) Date of publication of application: 19.08.2009
(73) Proprietor: Borealis Technology OY, 06101 Porvoo (FI)
(72) Inventor: Ruemer, Franz, 4222 St. Georgen/ Gusen (AT)
(74) Representative: Haggenmüller, Christian

(56) References cited:
- EP-A- 1 253 169
- EP-A- 1 614 712
- US-A1- 2002 040 081
- US-B1- 6 680 351

## Description

The present invention relates to a polymer composition having improved stability towards metal-promoted degradation.

Recent advances in the manufacturing and processing of polymers have led to the application of plastics in virtually every aspect of modem day life. However, polymeric compounds are prone to ageing under the effects of light, oxygen and heat. This results in a loss of strength, stiffness and flexibility, discolouration, scratching and loss of gloss.

Polymeric compounds, for example polyolefins like polyethylene and polypropylene, undergo radical driven degradation processes during processing steps which might include moulding, extrusion etc. However, degradation even proceeds during end-use by a radical mechanism under the influence of light, heat and will finally destroy the polymer properties.

It is well-known in the art that antioxidants and light stabilizers can prevent or at least reduce these effects. Several types of additives are added to polymers to protect them during processing and to achieve the desired end-use properties.

Antioxidants traditionally and currently used comprise hindered phenolics, aromatic amines, organo-phosphites/phosphonites and thioethers. Neutralizers are often used to boost performance and diminish effects of residual polymer acidity.

Antioxidants interrupt the degradation process in different ways, depending on their structure. The two major classifications are chain terminating primary antioxidants and hydroperoxide decomposing secondary antioxidants. Primary antioxidants react rapidly with peroxy radicals and are therefore called "radical scavengers". The majority of primary antioxidants for polyolefins are sterically hindered phenols. Secondary antioxidants react with hydroperoxides to yield non-radical products and are therefore frequently called hydroperoxide decomposers. Secondary antioxidants are particularly useful in synergistic combinations with primary antioxidants. A combination of several antioxidants often produces better results than a single system at the same concentration.

EP 1 614 712 A1 discloses a composition comprising (a) a polyolefin-based resin, and (b) a phenol-based antioxidant containing no aliphatic ester group and/or a sulphur-based antioxidant containing no aliphatic ester group. Besides other phenolic antioxidants, EP 1 614 712 A1 discloses 1,1,3-tris(2-methyl-4-(3-(3,5-di-tert-butyl-4-hydroxyphenyl)propionyloxy)-5-tert-butylphenyl)butane. To improve flame retardancy of the polymer composition, a metal hydrate and/or a metal hydroxide can be added. Besides other additives, hydrotalcite is mentioned. However, EP 1 614 712 A1 does not disclose the specific combination of 1,1,3-tris(2-methyl-4-(3-(3,5-di-tert-butyl-4-hydroxyphenyl)propionyloxy)-5-tert-butylphenyl)butane (or phenolic antioxidants of very similar chemical structure) with hydrotalcite.

EP 1 253 169 A2 discloses the use of specific phenolic antioxidants such as 1,1,3-tris(2-methyl-4-(3-(3,5-di-tert-butyl-4-hydroxyphenyl)propionyloxy)-5-tert-butylphenyl)butane for inhibiting degradation of a resin material caused by chlorine.

US 6,680,351 discloses a polyolefin composition having high resistance to degradation, said composition formed by combining components comprising at least one polyolefin, a diphosphite, triisopropanolamine, a hydrotalcite component, and at least one phenol component.

US 2002/0040081 discloses blends of phosphites comprising bis(2,4-dicumylphenyl)pentaerythritol diphosphite and hindered phenol antioxidants useful as stabilizers against polymer degradation during melt processing.

It is known that the presence of specific metals promotes the degradation process of polyolefins. Hydroperoxides undergo thermally induced homolytic decomposition to free radicals, which in turn initiate new oxidation chains which attack the polymer and cause degradation. This homolytic decomposition reaction is catalyzed in a redox reaction by the presence of catalytic amounts of certain metal ions, particularly transition metal ions, such as iron, cobalt, manganese, copper and titanium.

Thus, so-called metal deactivators need to be added to polyolefinic materials which are in contact or close to metallic parts, in particular parts comprising at least one of the above mentioned detrimental metal species, so as to provide sufficient long term heat stability. According to IUPAC definition (Pure & Appl. Chem., Vol. 68, 1996, pp. 2313-2323), a metal deactivator is an agent that deactivates or reduces the ability of metal ions to initiate or to catalyze the degradation of a polymer.

Metal deactivation is of great relevance in wire and cable technology as polyethylene or polypropylene layers are in direct contact or at least close to the copper conductor. However, efficient metal deactivation can be important in other areas as well, e.g. polyethylene or polypropylene pipes for hot and cold water applications, in particular if these come into contact with metal fittings such as brass fittings. Until recently, these brass fittings were nickel plated. However, in some countries such as Germany the standards for using metal inserts in drinking water applications have been changed so as to prevent further use of nickel plated inserts.

WO 02/092685 A1 discloses the use of a specific dithiocarbamate salt in combination with a metal deactivator for stabilising a thermoplastic resin which is in contact with detrimental metals or metal salts promoting degradation.

However, there is still a need in compositions having a strong metal deactivating effect.

Thus, it is an object of the present invention to provide a polymer composition that shows efficient metal deactivation and, consequently, can be used for the preparation of articles which are in contact with metals promoting degradation.

According to a first aspect of the present invention, the object is solved by providing a polymer composition, comprising
(i) a polyolefin,
(ii) a sterically hindered phenol of the following formula: 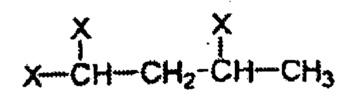 wherein the groups X, which can be the same or different, have the following formula: 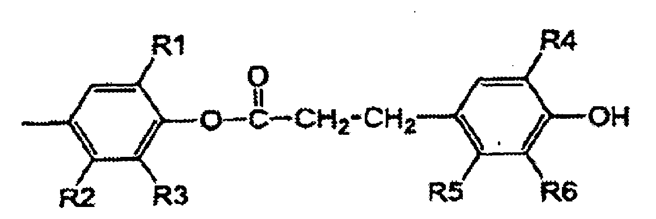 wherein R1 and R4, which can be the same or different, are an alkyl group having from 1 to 8 carbon atoms; R2, R3, R5, and R6, which can be the same or different, are hydrogen or an alkyl group having from 1 to 8 carbon atoms,
(iii) a hydrotalcite and/or bis(2,4-dicumylphenyl)pentaerythritol diphosphite.

As will be discussed below in further detail, the specific combination of components (ii) and (iii) results in a strong deactivating effect with regard to metals or salts of these metals which promote polyolefin degradation such as copper or iron. The term "metal" includes the neat metals but also alloys such as brass or bronze. The term "metal salt" includes any compound having metal atoms in oxidised form, e.g. copper oxides or iron oxides. Thus, the polymer composition of the present invention is particular useful in the preparation of shaped articles which comprise one or more of these degradation-promoting metals or salts of these metals; and/or which come into contact with a medium comprising one or more of these degradation-promoting metals or salts of these metals.

### (i) The polyolefin

Preferably, the polyolefin is selected from polyethylene, polypropylene, or any mixture thereof.

The polyethylene can be a homopolymer, a copolymer, or a mixture of these. Furthermore, the polyethylene can be unimodal or multimodal, eg. bimodal.

The "modality" of a polymer refers to the form of its molecular weight distribution curve, i.e. the appearance of the graph of the polymer weight fraction as function of its molecular weight. If the polymer is produced in a multi-stage process, utilizing reactors coupled in serial configuration and/or with reflux using different conditions in each reactor, the different fractions produced in the different reactors will each have their own molecular weight distribution. When the molecular weight distribution curves from these fractions are superimposed into the molecular weight distribution curve for the resulting polymer product, that curve will show two or more maxima or at least be distinctly broadened in comparison with the curves for the individual fractions. Such a polymer product, produced in two or more reaction zones, is called bimodal or multimodal depending on the number of zones. In the following all polymers thus produced in two or more reactors are called "multimodal". It is to be noted here that also the chemical compositions of the different fractions may be different.

Thus one or more fractions may consist of an ethylene co-polymer, while one or more others may consist of ethylene homopolymer.

When the ethylene polymer is a copolymer, the comonomer may be selected from various alpha-olefins with 3-8 carbon atoms and linear and substituted polyunsaturated copolymers. The use of dienes as comonomer increases the level of unsaturation in the polymer and thus is a way to further enhance crosslinkability. Preferably, the comonomer is selected from the group consisting of propene, 1-butene, 1-hexene, 4-methyl-1-pentene, 1-octene, 1,7-octadiene, 7-methyl-1,6-octadiene, and any mixture thereof.

A crosslinkable polyethylene composition is e.g. disclosed in WO 93/08222.

In a preferred embodiment, the polyethylene is crosslinked.

Crosslinking improves heat deformation resistance of polyethylene and therefore cable layers as well as pipes for hot water applications, such as pipes for floor heating, or for hot water distribution usually comprise crosslinked polyethylene (PEX).

Crosslinking of polyethylene can be accomplished in various ways by methods known to the skilled person, such as radiation crosslinking, peroxide crosslinking, crosslinking with crosslinkable groups, ionomer crosslinking, or combinations of such procedures. In radiation crosslinking, the crosslinking takes place by the polymer being irradiated with high-energy radiation, such as electron radiation, while in peroxide crosslinking, the crosslinking takes place by the addition of peroxide compounds, such as dicumyl peroxide, which form free radicals. In crosslinking with crosslinkable groups, reactive comonomers, preferably polyunsaturated comonomers, in particular non-conjugated dienes such as 1,7-octadiene and 7-methyl-1,6-octadiene, are inserted into the polymer. In ionomer crosslinking, the polymer contains ionisable groups, which react with polyvalent, ionic crosslinking reagents while developing ionic bonds.

Any suitable process which results in crosslinking of the polyethylene can be used. Preferably, the crosslinking is achieved by peroxide crosslinking or by using irradiation.

Appropriate polyethylene materials, either crosslinked or not, for the preparation of pipes or cables are commercially available or can be prepared by procedures known to the skilled person.

If the polyolefin is polypropylene, it can be a homopolymer, a copolymer, or a blend of these. The polypropylene can be unimodal or multimodal such as bimodal.

Preferably, the polyolefin comprises a propylene copolymer, more preferably a propylene random copolymer. As comonomers, ethylene and/or C4-C12 alpha-olefins can be used. Preferably, the comonomer units are present in an amount of 10.0 wt% or less, more preferably 5.0 wt% or less, based on the weight of the propylene copolymer. In preferred embodiments, the comonomer units are present in an amount of 0.5 to 10.0 wt%, more preferably 1.0 wt% to 5.0 wt%, based on the weight of the propylene copolymer.

In a preferred embodiment, a blend of a propylene homopolymer and a propylene random copolymer can be used, thereby resulting in a multimodal, preferably bimodal polypropylene matrix. As an alternative, it might be preferred to provide a blend of two different propylene random copolymers.

Preferably, the multimodal polypropylene is prepared by reactor blending, i.e. a first polypropylene, preferably a homopolymer or a random copolymer, is prepared in a first reactor and subsequently transferred to a second reactor where the second polypropylene, preferably a random copolymer, is prepared.

It is also possible, to provide a unimodal or multimodal polypropylene matrix, followed by the preparation of an ethylene-propylene rubber phase dispersed within the matrix so as to improve impact behaviour.

The polyolefin as described above can be prepared by using a conventional catalyst known to the skilled person. Preferably, the catalyst is a Ziegler-Natta catalyst. Alternatively, single site catalysts such as metallocene catalysts can be used.

Appropriate polypropylene materials for the preparation of pipes or cables are commercially available or can be prepared by procedures known to the skilled person. Propylene polymers for pipes are disclosed e.g. in W02006/122703.

### (ii) The sterically hindered phenol

In addition to the polyolefin described above, the polymer composition comprises a sterically hindered phenol of the following formula: 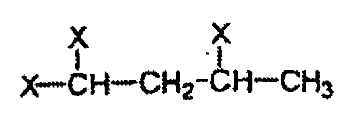 wherein the groups X, which can be the same or different, have the following formula: 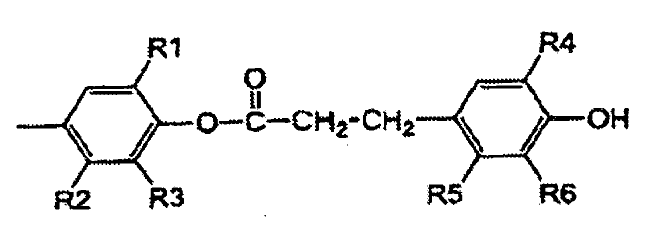 wherein R1 and R4, which can be the same or different, are an alkyl group having from 1 to 8 carbon atoms; R2, R3, R5, and R6, which can be the same or different, are hydrogen or an alkyl group having from 1 to 8 carbon atoms.

With respect to R1 and R4, examples of alkyl may include linear, branched chain or cyclic alkyl such as methyl, ethyl, n-propyl, isopropyl, n-butyl, isobutyl, sec-butyl, tert-butyl, n-pentyl, isopentyl, sec-pentyl, tert-pentyl, 2-methylbutyl, n-hexyl, isohexyl, sec-hexyl, tert-hexyl, cyclohexyl, heptyl, n-octyl, isooctyl, sec-octyl, tert-octyl, 2-ethylhexyl. Of these, preferred is alkyl having 1 to 5 carbon atoms, particularly preferably tert-butyl.

With respect to R2, R3, R5 and R6, examples of alkyl may include linear, branched chain or cyclic alkyl, such as methyl, ethyl, n-propyl, isopropyl, n-butyl, isobutyl, sec-butyl, tert-butyl, n-pentyl, isopentyl, sec-pentyl, tert-pentyl, 2-methylbutyl, n-hexyl, isohexyl, sec-hexyl, tert-hexyl, cyclohexyl, heptyl, n-octyl, isooctyl, sec-octyl, tert-octyl, 2-ethylhexyl. Of these, preferred is alkyl having 1 to 5 carbon atoms. Of these, R2 and R3 are particularly preferably hydrogen atom or methyl, R5 is particularly preferably hydrogen atom, and R6 is particularly preferably tert-butyl.

In a preferred embodiment, the sterically hindered phenol is selected from the group consisting of 1,1,3-tris(2-methyl-4-(3-(3,5-di-tert-butyl-4-hydroxyphenyl)propionyloxy)-5-tert-butylphenyl)butane, 1,1,3-tris(3-methyl-4-(3-(3,5-di-tert-butyl-4-hydroxyphenyl)propionyloxy)-5-tert-butylphenyl)butane, 1,1,3-tris(3-methyl-4-(3-(3-methyl-5-tert-butyl-4-hydroxyphenyl)propionyloxy)-5-tert-butylphenyl)butane, 1,1,3-tris(2-methyl-4-(3-(3-methyl-5-tert-butyl-4-hydroxyphenyl)-propionyloxy)-5-tert-butylphenyl)butane, or any mixture thereof. More preferably, the sterically hindered phenol is selected from 1,1,3-tris(2-methyl-4-(3-(3,5-di-tert-butyl-4-hydroxyphenyl)propionyloxy)-5-tert-butylphenyl)butane, 1,1,3-tris(3-methyl-4-(3-(3,5-di-tert-butyl-4-hydroxyphenyl)propionyloxy)-5-tert-butylphenyl)butane, or any mixture thereof.

Preferably, the sterically hindered phenol is present in an amount of 2.0 wt% or less, more preferably 1.0 wt% or less, based on the weight of the polymer composition. It is preferred that the sterically hindered phenol is present in an amount of 0.05 wt% to 2.0 wt%, more preferably 0.1 wt% to 1.0 wt%, even more preferably 0.1 wt% to 0.6 wt%, based on the weight of the polymer composition.

The sterically hindered phenol described above is commercially available (e.g. under the tradename GSY-242 from Yoshitomi Fine Chemicals) or can be prepared by methods known to the skilled person and described in e.g. EP 1 253 169, JP-A-8-225495 or US 5,883,286.

### (iii) The hydrotalcite and/or the diphosphite

In addition to the polyolefin and the sterically hindered phenol described above, the polymer composition of the present invention comprises a hydrotalcite and/or bis(2,4-dicumylphenyl)pentaerythritol diphosphite.

Hydrotalcites are derivatives of brucite, a naturally occuring layered magnesium hydroxide mineral. Within the present invention, natural and/or synthetic hydrotalcite can be used. The natural product can be described as Mg₆Al₂(OH)₁₆CO₃*4H₂O. Synthetic hydrotalcites can be made by substituting a trivalent metal cation such as Al for some of the magnesium cations normally present in a layer. The magnesium cations can also be substituted by other divalent cations. This substitution results in a net positive charge residing on the layer, which requires an intercalating anion to achieve a net neutral charge.

In principle, hydrotalcites can be described by the following general formula:

[M²⁺₁₋ₓM³⁺ₓ(OH)₂]^{x+}[Aⁿ⁻_{x/n}*mH₂O]^{x-}

In a preferred embodiment, the hydrotalcite is Mg_{4.5}Al₂(OH)₁₃(CO₃) * 3.5 H₂O (available e.g. under the tradename DHT-4A from Kyowa)

In other preferred embodiments, the hydrotalcite is Mg_{4.35}Al₂(OH)_{11.36}(CO₃)_{1.67} * H₂O (available e.g. from Reheis Inc. under the tradename L-55RII) or Mg₄Al₂(OH)₁₂(CO₃) * 2.85 H₂O (available e.g. from Baerlocher GmbH under the tradename Baeropol MC 6280).

Preferably, the hydrotalcite is present in an amount of 3.0 wt% or less, more preferably 2.0 wt% or less, even more preferably 1.0 wt% or less, and most preferably 0.5 wt% or less, based on the weight of the polymer composition. It is preferred that the hydrotalcite is present in an amount of 0.01 wt% to 2.0 wt%, more preferably 0.05 wt% to 1.0 wt%, even more preferably 0.05 wt% to 0.5 wt%, based on the weight of the polymer composition.

Hydrotalcite is commercially available or can be prepared by commonly known methods.

As an alternative to the hydrotalcite, bis(2,4-dicumylphenyl)pentaerythritol diphosphite can be added to the polyolefin and the sterically hindered phenol. Within the present invention, it is also possible to add the hydrotalcite together with the bis(2,4-dicumylphenyl)-pentaerythritol diphosphite to the polyolefin and the sterically hindered phenol.

Preferably, the bis(2,4-dicumylphenyl)pentaerythritol diphosphite is present in an amount of 1.0 wt% or less, more preferably 0.5 wt% or less, even more preferably 0.2 wt% or less, based on the weight of the polymer composition. It is preferred that the bis(2,4-dicumylphenyl)pentaerythritol diphosphite is present in an amount of 0.01 wt% to 0.5 wt%, more preferably 0.01 wt% to 0.2 wt%, based on the weight of the polymer composition.

The bis(2,4-dicumylphenyl)pentaerythritol diphosphite is commercially available, e.g. under the tradename Doverphos 9228 from Dover Chemical.

### Optional additives

In addition to the essential components discussed above, optional additives can be added to the polymer composition.

The optional additive may further comprise commonly known antioxidants such as sterically hindered phenols, phosphite and/or phosphonite based antioxidants, thioether based antioxidants, or amine based antioxidants, which are different from the sterically hindered phenol and the diphosphite discussed above. However, it may also be preferred that the polymer composition does not comprise additional phenol-, phosphite- and/or phosphonite-based antioxidants but only those as defined in claim 1 of the present invention.

The optional additive may also comprise UV stabilisers such as hindered amine light stabilisers, and any other ingredient which is commonly added to polyolefins, in particular polyolefins used for the preparation of pipes and cables, to improve stability and/or processing properties.

The components of the polymer composition, either essential or only optional, can be mixed by commonly known blending methods, e.g. in an extruder or a kneading device.

### Further aspects of the present invention

According to a further aspect, the present invention provides a shaped article, comprising the polymer composition as defined above.

Preferably, the shaped article is a pipe, e.g. a pipe for hot and cold water applications.

In another preferred embodiment, the shaped article is a cable, in particular a power cable, having one or more polymer layers.

In a preferred embodiment, the shaped article such as a pipe or a cable comprises a metal selected from the group consisting of copper, iron, cobalt, manganese, and titanium, and/or a salt of these metals.

Preferably, the metal and/or salt thereof is in contact with the polymer composition. The term "in contact" has to be interpreted broadly and encompasses e.g. distribution of the metal or a salt thereof within the bulk part of the polymer composition as well as any contact via the surface of the polymer composition.

In a preferred embodiment, the shaped article is a pipe and the metal is present in the form of a metallic fitting. Preferably, the metallic fitting is a brass fitting.

In another preferred embodiment, the shaped article is a cable and the metal is present in the form of a metallic conductor, in particular a copper conductor.

According to another aspect, the present invention provides a metal deactivator agent, comprising the following components:
(i) a sterically hindered phenol of the following formula: 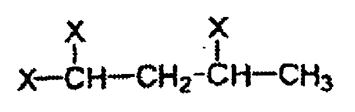 wherein the groups X, which can be the same or different, have the following formula: 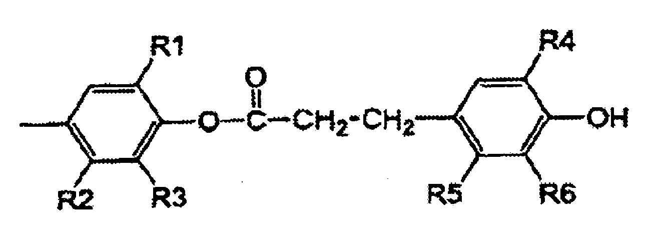 wherein R1 and R4, which can be the same or different, are an alkyl group having from 1 to 8 carbon atoms; R2, R3, R5, and R6, which can be the same or different, are hydrogen or an alkyl group having from 1 to 8 carbon atoms,
(ii) a hydrotalcite and/or bis(2,4-dicumylphenyl)pentaerythritol diphosphite.

With regard to the components of the metal deactivation agent, reference can be made to the statements made above when discussing the polymer composition of the present invention. In a preferred embodiment, the agent is provided in the form of a kit, i.e. a package wherein the components are still separated.

However, it is also possible to provide the components in the form of a blend.

According to a further aspect, the present invention provides the use of a sterically hindered phenol for metal deactivation in a polymer composition, wherein the sterically hindered phenol has the following formula: 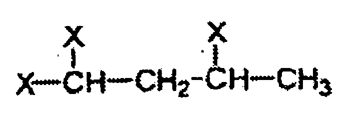 wherein the groups X, which can be the same or different, have the following formula: 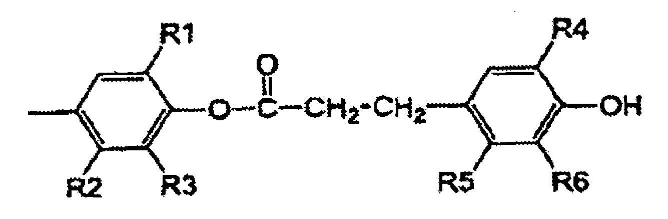 wherein R1 and R4, which can be the same or different, are an alkyl group having from 1 to 8 carbon atoms; R2, R3, R5, and R6, which can be the same or different, are hydrogen or an alkyl group having from 1 to 8 carbon atoms, and wherein the polymer composition comprises a polyolefin.

Preferably, the sterically hindered phenol is used in combination with a hydrotalcite and/or bis(2,4-dicumylphenyl)pentaerythritol diphosphite.

With regard to further details about the sterically hindered phenol, the hydrotalcite and the bis(2,4-dicumylphenyl)pentaerythritol diphosphite, reference can be made to the statements provided above when discussing the polymer composition of the present invention.

Preferably, metal deactivation is directed to a metal selected from the group consisting of copper, iron, cobalt, manganese, and titanium, and/or a salt of these metals.

According to a further aspect, the present invention provides the use of a polymer composition for reducing metal-promoted degradation in a shaped article, wherein the shaped article comprises and/or is in contact with a metal selected from the group consisting of copper, iron, cobalt, manganese, and titanium, and/or a salt of these metals, and the polymer composition comprises
(i) a polyolefin, and
(ii) a sterically hindered phenol of the following formula: 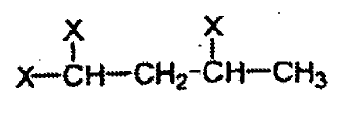 wherein the groups X, which can be the same or different, have the following formula: 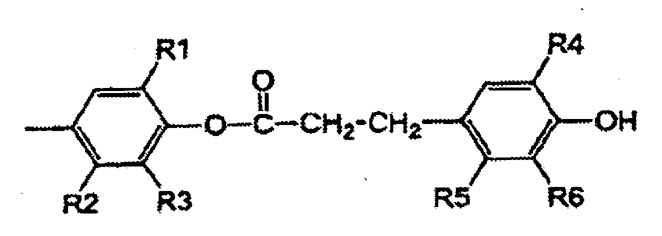 wherein R1 and R4, which can be the same or different, are an alkyl group having from 1 to 8 carbon atoms; R2, R3, R5, and R6, which can be the same or different, are hydrogen or an alkyl group having from 1 to 8 carbon atoms,

Reduction in metal-promoted degradation means that the polymer composition has a metal deactivating effect when brought into contact with detrimental metals such as copper which initiate or catalyse the degradation of polyolefins.

In a preferred embodiment, the polymer composition defined above is used for the preparation of a shaped article, e.g. a water pipe, which is in contact with a medium comprising a metal selected from the group consisting of copper, iron, cobalt, manganese, and titanium, and/or a salt of these metals. As an example, the medium being in contact with the shaped article is water containing copper or a salt thereof.

Preferably, the polymer composition further comprises a hydrotalcite and/or bis(2,4-dicumylphenyl)pentaerythritol diphosphite.

With regard to further details about the polyolefin, the sterically hindered phenol, the hydrotalcite and the bis(2,4-dicumylphenyl)pentaerythritol diphosphite, reference can be made to the statements provided above when discussing the polymer composition of the present invention.

Preferably, the shaped article is a pipe, e.g. a pipe for hot and cold water applications.

In another preferred embodiment, the shaped article is a cable, in particular a power cable, having one or more polymer layers.

Preferably, the metal and/or salt thereof is in contact with the polymer composition. The term "in contact" has to be interpreted broadly and encompasses e.g. distribution of the metal or a salt thereof within the bulk part of the polymer composition as well as any contact via the surface of the polymer composition.

In a preferred embodiment, the metal is present in the form of a metallic fitting. Preferably, the metallic fitting is a brass fitting.

As outlined above, the metal or a salt thereof, may also come into contact with the polymer composition via an aqueous medium comprising said metal or metal salt. As an example, the medium could be copper-containing water transported within the pipe.

### EXAMPLES

### 1. Measuring methods

### Melt flow rate MFR

The melt flow rates were measured with a load of 2.16 kg at 230 °C for polypropylene and at 190 °C for polyethylene. The melt flow rate is that quantity of polymer in grams which the test apparatus standardised to ISO 1133 extrudes within 10 minutes at a temperature of 230 °C or 190 °C respectively, under a load of 2.16 kg.

### Metal-promoted degradation behaviour

Preparation of polymer samples in contact with copper: See below.

Assessment of degradation behaviour based on oven test according to ISO 4577:1983.

### 2. Preparation and evaluation of test samples

To demonstrate the metal deactivating effect of a polyolefin composition comprising the specific sterically hindered phenol, the following compositions were provided:

| | |
|---|---|
| Compo. 1 | 99.93 wt% propylene random copolymer, |
| | C2 content: 3.6 wt% ; MFR₂(230°C)=0.25 g/10 min |
| | 0.07 wt% calcium stearate |
| Compo. 2 | 99.73 wt% propylene random copolymer (same as above) |
| | 0.2 wt% 1,1,3-tris(2-methyl-4-(3-(3,5-di-tert-butyl-4-hydroxyphenyl)propionyloxy)-5-tert-butylphenyl)butane |
| | 0.07 wt% calcium stearate |
| Compo. 3 | 99.43 wt% propylene random copolymer (same as above) |
| | 0.5 wt% 1,1,3-tris(2-methyl-4-(3-(3,5-di-tert-butyl-4-hydroxyphenyl)propionyloxy)-5-tert-butylphenyl)butane |
| | 0.07 wt% calcium stearate |

To demonstrate the synergistic effect with respect to metal deactivation which results from the combination of a specific sterically hindered phenol with hydrotalcite and/or bis(2,4-dicumylphenyl)pentaerythritol diphosphite, the following compositions were provided:

| | |
|---|---|
| Compo. 4 | 99.63 wt% of a propylene random copolymer (C2 content : 3.6 wt% ; MFR₂(230°C)=0.25 g/10 min |
| | 0.2 wt% 1,1,3-tris(2-methyl-4-(3-(3,5-di-tert-butyl-4-hydroxyphenyl)propionyloxy)-5-tert-butylphenyl)butane |
| | 0.1 wt% tris(2,4-di-t-butylphenyl)phosphite |
| | 0.07 wt% calcium stearate |
| Compo. 5 | 99.65 wt% of a propylene random copolymer (same as above) |
| | 0.2 wt% 1,1,3-tris(2-methyl-4-(3-(3,5-di-tert-butyl-4-hydroxyphenyl)propionyloxy)-5-tert-butylphenyl)butane |
| | 0.08 bis(2,4-dicumylphenyl)pentaerythritol diphosphite |
| | 0.07 wt% calcium stearate |
| Compo. 6 | 99.53 wt% of a propylene random copolymer (same as above) |
| | 0.2 wt% 1,1,3-tris(2-methyl-4-(3-(3,5-di-tert-butyl-4-hydroxyphenyl)propionyloxy)-5-tert-butylphenyl)butane |
| | 0.1 wt% hydrotalcite (Mg_{4.5}Al₂(OH)₁₃(CO₃) * 3.5 H₂O) |
| | 0.1 wt% tris(2,4-di-t-butylphenyl)phosphite |
| | 0.07 wt% calcium stearate |
| Compo. 7 | 99.55 wt% of a propylene random copolymer (same as above) |
| | 0.2 wt% 1,1,3-tris(2-methyl-4-(3-(3,5-di-tert-butyl-4-hydroxyphenyl)propionyloxy)-5-tert-butylphenyl)butane |
| | 0.08 wt% bis(2,4-dicumylphenyl)pentaerythritol diphosphite |
| | 0.1 wt% hydrotalcite (Mg_{4.5}Al₂(OH)₁₃(CO₃) * 3.5 H₂O) |
| | 0.07 wt% calcium stearate |

Calcium stearate was added as a lubricant. It has no significant effect on metal deactivation.

From these compositions test samples 1 to 7 comprising copper were prepared as follows:

From each composition, two pressed plaques having a thickness of about 1 mm were prepared. Subsequently, a copper net was placed between the plaques and a pressure of 50 bar was applied, pressing temperature 220°C. Thus, a polypropylene test sample is obtained which includes a copper net.

The samples containing copper were then subjected to a stability test in an oven at elevated temperature. The stability test and the assessment of the degradation behaviour was made on the basis of ISO 4577:1983 (Determination of thermal oxidative stability in air - the oven method).

The results are shown in Tables 1 and 2.

**Table 1: Metal deactivation with sterically hindered phenol**

| | Sample 1 (Comparative Example) | Sample 2 | Sample 3 |
|---|---|---|---|
| Time of failure at 140°C in air | 1008 h | 1704 h | 1922 h |
| Time of failure at 120°C in air | >2600 h | >3900 h | >3900 h |

The results clearly indicate that sterically hindered phenols as described in the present invention can be used for metal deactivation in a polyolefin composition. In other words, the use of these sterically hindered phenols reduces the metal-promoted degradation of polyolefins.

**Table 2: Metal deactivation with sterically hindered phenol in combination with hydrotalcite and/or diphosphite**

| | Sample 4 | Sample 5 | Sample 6 | Sample 7 |
|---|---|---|---|---|
| Time of failure at 140°C in air | 144 h | 288 h | 1704 h | >3900 h |
| Time of failure at 120°C in air | 1008 h | >3900 h | >3900 h | >3900 h |

Sample 4, which was provided as a reference, comprises tris(2,4-di-t-butylphenyl)phosphite, i.e. a commonly known phosphite antioxidant available under its trade name Irgafos 168. By replacing tris(2,4-di-t-butylphenyl)phosphite with either hydrotalcite or bis(2,4-dicumylphenyl)pentaerythritol diphosphite (also known under its trade name Doverphos 9228), a significant reduction in metal-promoted degradation can be observed. When using hydrotalcite in combination with bis(2,4-dicumylphenyl)pentaerythritol diphosphite, even a further improvement in metal deactivation is obtained.

## Claims

1. A polymer composition, comprising
(i) a polyolefin,
(ii) a sterically hindered phenol of the following formula: 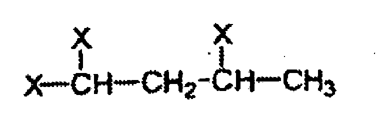 wherein the groups X, which can be the same or different, have the following formula: 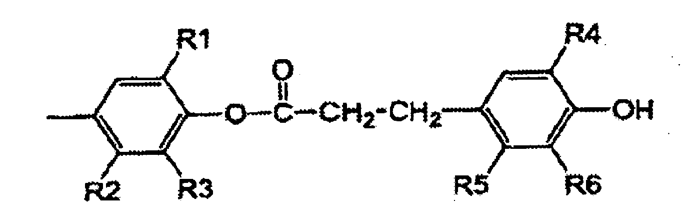 wherein R1 and R4, which can be the same or different, are an alkyl group having from 1 to 8 carbon atoms; R2, R3, R5, and R6, which can be the same or different, are hydrogen or an alkyl group having from 1 to 8 carbon atoms,
(iii) a hydrotalcite and/or bis(2,4-dicumylphenyl)pentaerythritol diphosphite.

2. The polymer composition according to claim 1, wherein the polyolefin is selected from polyethylene, polypropylene, or any mixture thereof.

3. The polymer composition according to one of the preceding claims, wherein the polyethylene is crosslinked.

4. The polymer composition according to claim 2, wherein the polypropylene is a random copolymer comprising comonomer units derived from ethylene and/or C₄ to C₁₂ alpha-olefins.

5. The polymer composition according to claim 4, wherein the propylene random copolymer has an amount of comonomer units of 10.0 wt% or less.

6. The polymer composition according to one of the preceding claims, wherein the sterically hindered phenol is selected from the group consisting of 1,1,3-tris(2-methyl-4-(3-(3,5-di-tert-butyl-4-hydroxyphenyl)propionyloxy)-5-tert-butylphenyl)butane, 1,1,3-tris(3-methyl-4-(3-(3,5-di-tert-butyl-4-hydroxyphenyl)propionyloxy)-5-tert-butylphenyl)butane, 1,1,3-tris(3-methyl-4-(3-(3-methyl-5-tert-butyl-4-hydroxyphenyl)propionyloxy)-5-tert-butylphenyl)butane, 1,1,3-tris(2-methyl-4-(3-(3-methyl-5-tert-butyl-4-hydroxyphenyl)-propionyloxy)-5-tert-butylphenyl)butane, or any mixture thereof.

7. The polymer composition according to one of the preceding claims, wherein the sterically hindered phenol is present in an amount of 2.0 wt% to 0.05 wt%, based on the weight of the polymer composition.

8. The polymer composition according to one of the preceding claims, wherein the hydrotalcite is Mg_{4.5}Al₂(OH)₁₃(CO₃) * 3.5 H₂O.

9. The polymer composition according to one of the preceding claims, wherein the hydrotalcite is present in an amount of 3.0 wt% to 0.01 wt%, based on the weight of the polymer composition.

10. The polymer composition according to one of the preceding claims, wherein the bis(2,4-dicumylphenyl)pentaerythritol diphosphite is present in an amount of 1.0 wt% to 0.01 wt%, based on the weight of the polymer composition.

11. A shaped article, comprising the polymer composition according to one of the claims 1 to 10.

12. The shaped article according to claim 11, being a pipe.

13. The shaped article according to claim 11, being a cable.

14. The shaped article according to one of the claims 11 to 13, further comprising a metal selected from the group consisting of copper, iron, cobalt, manganese and titanium, and/or a salt of these metals.

15. The shaped article according to claim 14, wherein the metal and/or salt thereof is in contact with the polymer composition.

16. The shaped article according to one of the claims 11 to 15, wherein the metal is present in the form of a metallic fitting.

17. The shaped article according to claim 16, wherein the metallic fitting is a brass fitting.

18. A metal deactivator agent, comprising the following components:
(i) a sterically hindered phenol of the following formula: 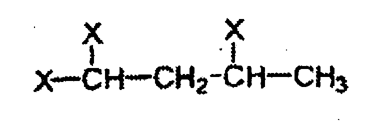 wherein the groups X, which can be the same or different, have the following formula: 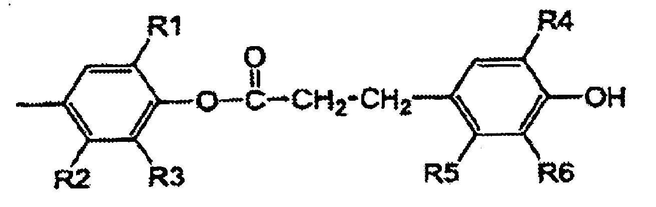 wherein R1 and R4, which can be the same or different, are an alkyl group having from 1 to 8 carbon atoms; R2, R3, R5, and R6, which can be the same or different, are hydrogen or an alkyl group having from 1 to 8 carbon atoms,
(ii) a hydrotalcite and/or bis(2,4-dicumylphenyl)pentaerythritol diphosphite.

19. The metal deactivator agent according to claim 18, wherein the agent is provided in the form of a kit.

20. The metal deactivator agent according to claim 18, wherein the components are provided in the form of a blend.

21. Use of a sterically hindered phenol for metal deactivation in a polymer composition, wherein the sterically hindered phenol has the following formula: 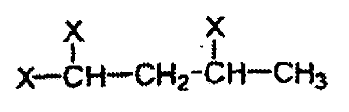 wherein the groups X, which can be the same or different, have the following formula: 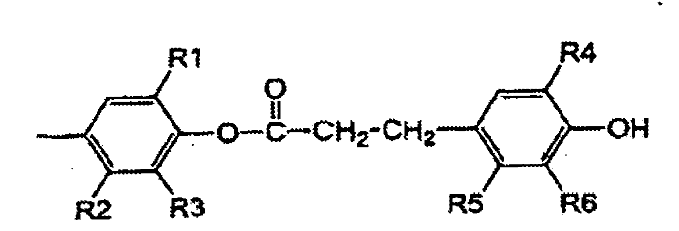 wherein R1 and R4, which can be the same or different, are an alkyl group having from 1 to 8 carbon atoms; R2, R3, R5, and R6, which can be the same or different, are hydrogen or an alkyl group having from 1 to 8 carbon atoms and wherein the the polymer composition comprises a polyolefin.

22. The use according to claim 21, wherein the sterically hindered phenol is used in combination with a hydrotalcite and/or bis(2,4-dicumylphenyl)pentaerythritol diphosphite.

23. Use of a polymer composition for reducing metal-promoted degradation in a shaped article, wherein the shaped article comprises a metal and/or comes into contact with a metal, the metal being selected from the group consisting of copper, iron, cobalt, manganese, and titanium, and/or a salt of these metals, and the polymer composition comprises:
(i) a polyolefin, and
(ii) a sterically hindered phenol of the following formula: 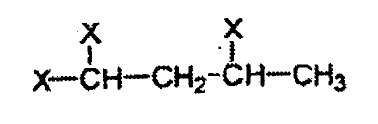 wherein the groups X, which can be the same or different, have the following formula: 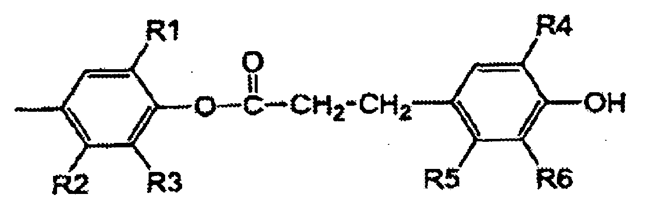
wherein R1 and R4, which can be the same or different, are an alkyl group having from 1 to 8 carbon atoms; R2, R3, R5, and R6, which can be the same or different, are hydrogen or an alkyl group having from 1 to 8 carbon atoms.

24. The use according to claim 23, the polymer composition further comprising a hydrotalcite and/or bis(2,4-dicumylphenyl)pentaerythritol diphosphite.

## Patentansprüche

1. Polymer-Zusammensetzung, umfassend
(i) ein Polyolefin,
(ii) ein sterisch gehindertes Phenol mit der nachstehenden Formel: 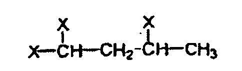 worin die Gruppen X, die gleich oder verschieden sein können, die nachstehende Formel aufweisen: 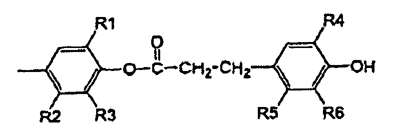 worin R1 und R4, die gleich oder verschieden sein können, eine Alkyl-Gruppe mit 1 bis 8 Kohlenstoff-Atomen darstellen; R2, R3, R5 und R6, die gleich oder verschieden sein können, Wasserstoff oder eine Alkyl-Gruppe mit 1 bis 8 Kohlenstoff-Atomen darstellen,
(iii) ein Hydrotalcit und/oder Bis-(2,4-dicumylphenyl)-pentaerythrit-diphosphit.

2. Polymer-Zusammensetzung nach Anspruch 1, wobei das Polyolefin aus Polyethylen, Polypropylen oder einem beliebigen Gemisch davon ausgewählt ist.

3. Polymer-Zusammensetzung nach einem der vorangehenden Ansprüche, wobei das Polyethylen vernetzt ist.

4. Polymer-Zusammensetzung nach Anspruch 2, wobei das Polypropylen ein statistisches Copolymer darstellt, umfassend Comonomer-Einheiten, abgeleitet von Ethylen und/oder C₄ bis C₁₂ α-Olefinen.

5. Polymer-Zusammensetzung nach Anspruch 4, wobei das statistische Propylen-Copolymer eine Menge an Comonomer-Einheiten von 10,0 Gew.-% oder weniger aufweist.

6. Polymer-Zusammensetzung nach einem der vorangehenden Ansprüche, wobei das sterisch gehinderte Phenol aus der Gruppe, bestehend aus 1,1,3-Tris-(2-methyl-4-(3-(3,5-di-tert-butyl-4-hydroxyphenyl)-propionyloxy)-5-tert-butylphenyl)-butan, 1,1,3-Tris-(3-methyl-4-(3-(3,5-di-tert-butyl-4-hydroxyphenyl)-propionyloxy)-5-tert-butylphenyl)-butan, 1,1,3-Tris-(3-methyl-4-(3-(3-methyl-5-tert-butyl-4-hydroxyphenyl)-propionyloxy)-5-tert-butylphenyl)-butan, 1,1,3-Tris-(2-methyl-4-(3-(3-methyl-5-tert-butyl-4-hydroxyphenyl)-propionyloxy)-5-tert-butylphenyl)-butan oder einem beliebigen Gemisch davon, ausgewählt ist.

7. Polymer-Zusammensetzung nach einem der vorangehenden Ansprüche, wobei das sterisch gehinderte Phenol in einer Menge von 2,0 Gew.-% bis 0,05 Gew.-%, bezogen auf das Gewicht der Polymer-Zusammensetzung, vorliegt.

8. Polymer-Zusammensetzung nach einem der vorangehenden Ansprüche, wobei das Hydrotalcit Mg₄,₅Al₂(OH)₁₃(CO₃) * 3,5 H₂O ist.

9. Polymer-Zusammensetzung nach einem der vorangehenden Ansprüche, wobei das Hydrotalcit in einer Menge von 3,0 Gew.-% bis 0,01 Gew.-%, bezogen auf das Gewicht der Polymer-Zusammensetzung, vorliegt.

10. Polymer-Zusammensetzung nach einem der vorangehenden Ansprüche, wobei das Bis-(2,4-dicumylphenyl)-pentaerythritdiphosphit in einer Menge von 1,0 Gew.-% bis 0,01 Gew.-%, bezogen auf das Gewicht der Polymer-Zusammensetzung, vorliegt.

11. Form-Gegenstand, umfassend die Polymer-Zusammensetzung nach einem der Ansprüche 1 bis 10.

12. Form-Gegenstand nach Anspruch 11, der ein Rohr ist.

13. Form-Gegenstand nach Anspruch 11, der ein Kabel ist.

14. Form-Gegenstand nach einem der Ansprüche 11 bis 13, weiterhin umfassend ein Metall, ausgewählt aus der Gruppe, bestehend aus Kupfer, Eisen, Kobalt, Mangan und Titan und/oder einem Salz von diesen Metallen.

15. Form-Gegenstand nach Anspruch 14, wobei das Metall und/oder Salz davon in Kontakt mit der Polymer-Zusammensetzung vorliegt.

16. Form-Gegenstand nach einem der Ansprüche 11 bis 15, wobei das Metall in Form von einem metallischen Pass-Stück vorliegt.

17. Form-Gegenstand nach Anspruch 16, wobei das metallische Pass-Stück ein Messing-Pass-Stück ist.

18. Metall-Desaktivator-Mittel, umfassend die nachstehenden Komponenten:
(i) ein sterisch gehindertes Phenol mit der nachstehenden Formel: 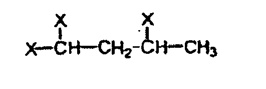 worin die Gruppen X, die gleich oder verschieden sein können, die nachstehende Formel aufweisen: 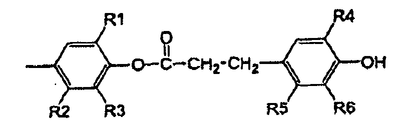 worin R1 und R4, die gleich oder verschieden sein können, eine Alkyl-Gruppe mit 1 bis 8 Kohlenstoff-Atomen darstellen; R2, R3, R5 und R6, die gleich oder verschieden sein können, Wasserstoff oder eine Alkyl-Gruppe mit 1 bis 8 Kohlenstoff-Atomen darstellen,
(ii) ein Hydrotalcit und/oder Bis-(2,4-dicumylphenyl)-pentaerythrit-diphosphit.

19. Metall-Desaktivator-Mittel nach Anspruch 18, wobei das Mittel in Form von einem Kit bereitgestellt wird.

20. Metall-Desaktivator-Mittel nach Anspruch 18, wobei die Komponenten in Form von einem Blend bereitgestellt werden.

21. Verwendung von einem sterisch gehinderten Phenol zur Metall-Desaktivierung in einer Polymer-Zusammensetzung, wobei das sterisch gehinderte Phenol die nachstehende Formel aufweist: 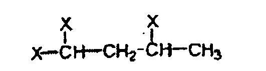 worin die Gruppen X, die gleich oder verschieden sein können, die nachstehende Formel aufweisen: 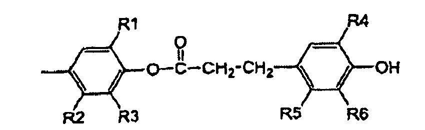 worin R1 und R4, die gleich oder verschieden sein können, eine Alkyl-Gruppe mit 1 bis 8 Kohlenstoff-Atomen darstellen; R2, R3, R5 und R6, die gleich oder verschieden sein können, Wasserstoff oder eine Alkyl-Gruppe mit 1 bis 8 Kohlenstoff-Atomen darstellen und worin die Polymer-Zusammensetzung ein Polyolefin umfasst.

22. Verwendung nach Anspruch 21, wobei das sterisch gehinderte Phenol in Kombination mit einem Hydrotalcit und/oder Bis-(2,4-dicumylphenyl)-pentaerythrit-diphosphit verwendet wird.

23. Verwendung von einer Polymer-Zusammensetzung zum Vermindern von durch Metall gefördertem Abbau in einem Form-Gegenstand, wobei der Form-Gegenstand ein Metall umfasst und/oder mit einem Metall in Kontakt kommt, wobei das Metall aus der Gruppe, bestehend aus Kupfer, Eisen, Kobalt, Mangan und Titan, und/oder einem Salz von diesen Metallen, ausgewählt ist und die Polymer-Zusammensetzung umfasst:
(i) ein Polyolefin, und
(ii) ein sterisch gehindertes Phenol mit der nachstehenden Formel: 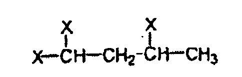 worin die Gruppen X, die gleich oder verschieden sein können, die nachstehende Formel aufweisen: 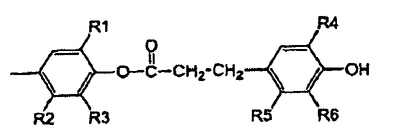 worin R1 und R4, die gleich oder verschieden sein können, eine Alkyl-Gruppe mit 1 bis 8 Kohlenstoff-Atomen darstellen; R2, R3, R5 und R6, die gleich oder verschieden sein können, Wasserstoff oder eine Alkyl-Gruppe mit 1 bis 8 Kohlenstoff-Atomen darstellen.

24. Verwendung nach Anspruch 23, wobei die Polymer-Zusammensetzung weiterhin ein Hydrotalcit und/oder Bis-(2,4-dicumylphenyl)-pentaerythrit-diphosphit umfasst.

## Revendications

1. Composition polymère, comprenant :
(i) une polyoléfine,
(ii) un phénol à empêchement stérique correspondant à la formule suivante : 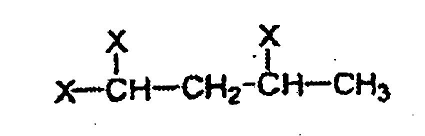 dans laquelle les groupes X, qui peuvent être identiques ou différents, correspondent à la formule suivante : 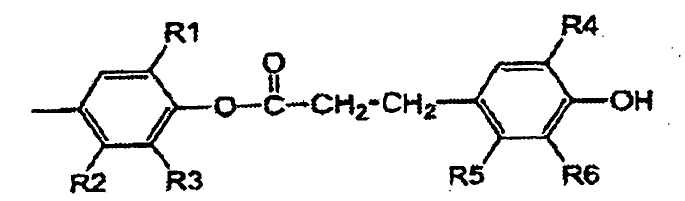 dans laquelle R1 et R4, qui peuvent être identiques ou différents, sont un groupe alkyle comprenant 1 à 8 atomes de carbone ; R2, R3, R5 et R6, qui peuvent être identiques ou différents, sont l'hydrogène ou un groupe alkyle comprenant 1 à 8 atomes de carbone,
(iii) une hydrotalcite et/ou un diphosphite de bis(2,4-dicumylphényl)pentaérythritol.

2. Composition polymère selon la revendication 1, dans laquelle la polyoléfine est sélectionnée parmi le polyéthylène, le polypropylène ou un mélange quelconque de ceux-ci.

3. Composition polymère selon l'une des revendications précédentes, dans laquelle le polyéthylène est réticulé.

4. Composition polymère selon la revendication 2, dans laquelle le polypropylène est un copolymère aléatoire comprenant des motifs comonomères dérivés de l'éthylène et/ou d'alpha-oléfines en C₄ à C₁₂.

5. Composition polymère selon la revendication 4, dans laquelle le copolymère aléatoire de propylène a une quantité de motifs comonomères de 10,0 % en poids ou moins.

6. Composition polymère selon l'une des revendications précédentes, dans laquelle le phénol à empêchement stérique est sélectionné dans le groupe composé du 1,1,3-tris(2-méthyl-4-(3-(3,5-di-tert-butyl-4-hydroxyphényl)propionyloxy)-5-tert-butylphényl)butane, du 1,1,3-tris(3-méthyl-4-(3-(3,5-di-tert-butyl-4-hydroxyphényl)propionyloxy)-5-tert-butylphényl)-butane, du 1,1,3-tris(3-méthyl-4-(3-(3-méthyl-5-tert-butyl-4-hydroxyphényl)-propionyloxy)-5-tert-butylphényl)butane, du 1,1,3-tris(2-méthyl-4-(3-(3-méthyl-5-tert-butyl-4-hydroxyphényl)propionyloxy)-5-tert-butylphényl)butane, ou d'un mélange quelconque de ceux-ci.

7. Composition polymère selon l'une des revendications précédentes, dans laquelle le phénol à empêchement stérique est présent dans une quantité comprise entre 2,0 % en poids et 0,05 % en poids, sur la base du poids de la composition polymère.

8. Composition polymère selon l'une des revendications précédentes, dans laquelle l'hydrotalcite est Mg_{4,5}Al₂(OH)₁₃(CO₃) * 3,5 H₂O.

9. Composition polymère selon l'une des revendications précédentes, dans laquelle l'hydrotalcite est présente dans une quantité comprise entre 3,0 % en poids et 0,01 % en poids, sur la base du poids de la composition polymère.

10. Composition polymère selon l'une des revendications précédentes, dans laquelle le diphosphite de bis(2,4-dicumylphényl)pentaérythritol est présent dans une quantité comprise entre 1,0 % en poids et 0,01 % en poids, sur la base du poids de la composition polymère.

11. Article façonné comprenant la composition polymère selon l'une des revendications 1 à 10.

12. Article façonné selon la revendication 11, qui est une conduite.

13. Article façonné selon la revendication 11, qui est un câble.

14. Article façonné selon l'une des revendications 11 à 13, comprenant en outre un métal sélectionné dans le groupe composé du cuivre, du fer, du cobalt, du manganèse et du titane, et/ou un sel de ces métaux.

15. Article façonné selon la revendication 14, dans lequel le métal et/ou le sel de celui-ci se trouve en contact avec la composition polymère.

16. Article façonné selon l'une des revendications 11 à 15, dans lequel le métal est présent sous la forme d'un raccord métallique.

17. Article façonné selon la revendication 16, dans lequel le raccord métallique est un raccord en laiton.

18. Agent désactivateur de métaux, comprenant les composants suivants :
(i) un phénol à empêchement stérique correspondant à la formule suivante : 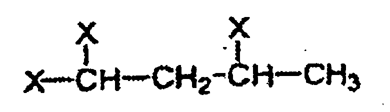 dans laquelle les groupes X, qui peuvent être identiques ou différents, correspondent à la formule suivante : 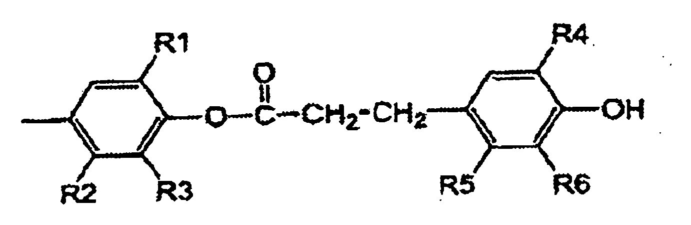 dans laquelle R1 et R4, qui peuvent être identiques ou différents, sont un groupe alkyle comprenant 1 à 8 atomes de carbone ; R2, R3, R5 et R6, qui peuvent être identiques ou différents, sont l'hydrogène ou un groupe alkyle comprenant 1 à 8 atomes de carbone,
(iii) une hydrotalcite et/ou un diphosphite de bis(2,4-dicumylphényl)pentaérythritol.

19. Agent désactivateur de métaux selon la revendication 18, dans lequel l'agent est fourni sous la forme d'un kit.

20. Agent désactivateur de métaux selon la revendication 18, dans lequel les composants sont fournis sous la forme d'un mélange.

21. Utilisation d'un phénol à empêchement stérique pour la désactivation de métaux dans une composition polymère, dans laquelle le phénol à empêchement stérique correspond à la formule suivante : 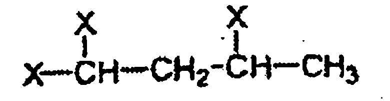 dans laquelle les groupes X, qui peuvent être identiques ou différents, correspondent à la formule suivante : 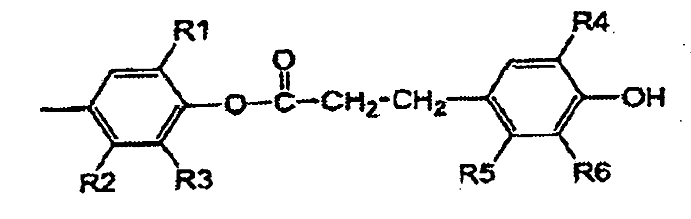 dans laquelle R1 et R4, qui peuvent être identiques ou différents, sont un groupe alkyle comprenant 1 à 8 atomes de carbone ; R2, R3, R5 et R6, qui peuvent être identiques ou différents, sont l'hydrogène ou un groupe alkyle comprenant 1 à 8 atomes de carbone,
et dans laquelle la composition polymère comprend une polyoléfine.

22. Utilisation selon la revendication 21, dans laquelle le phénol à empêchement stérique est utilisé en combinaison avec une hydrotalcite et/ou un diphosphite de bis(2,4-dicumylphényl)pentaérythritol.

23. Utilisation d'une composition polymère pour réduire la dégradation favorisée par le métal dans un article façonné, où l'article façonné comprend un métal et/ou vient en contact avec un métal, le métal étant sélectionné dans le groupe composé du cuivre, du fer, du cobalt, du manganèse et du titane, et/ou un sel de ces métaux, et la composition polymère comprend :
(i) une polyoléfine, et
(ii) un phénol à empêchement stérique correspondant à la formule suivante : 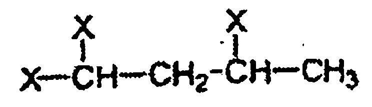 dans laquelle les groupes X, qui peuvent être identiques ou différents, correspondent à la formule suivante : 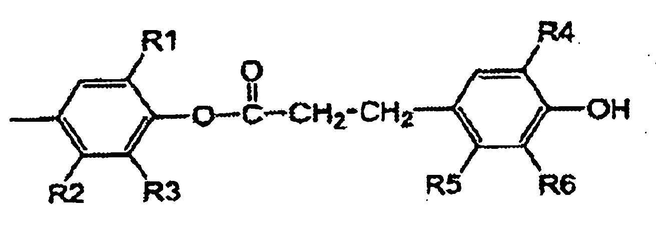 dans laquelle R1 et R4, qui peuvent être identiques ou différents, sont un groupe alkyle comprenant 1 à 8 atomes de carbone ; R2, R3, R5 et R6, qui peuvent être identiques ou différents, sont l'hydrogène ou un groupe alkyle comprenant 1 à 8 atomes de carbone.

24. Utilisation selon la revendication 23, la composition polymère comprenant en outre une hydrotalcite et/ou un diphosphite de bis(2,4-dicumylphényl)pentaérythritol.
